# EUROPEAN PATENT SPECIFICATION

(11) **EP 3 310 164 B1**
(45) Date of publication and mention of the grant of the patent: **07.06.2023**
(21) Application number: 16807897.0
(22) Date of filing: 10.06.2016
(51) Int. Cl.: A01N 25/18, A01P 19/00, A01N 31/02, A01N 31/04, A01N 33/04, A01N 37/02, A01M 1/02, A01M 13/00, A01M 1/10, A01M 1/14, A01M 1/20, A01N 37/34

(54) **METHOD AND SYSTEM FOR ATTRACTING LEPIDOPTEROUS INSECTS**
VERFAHREN UND SYSTEM ZUR ANZIEHUNG VON LEPIDOPTEREN INSEKTEN
PROCÉDÉ ET SYSTÈME PERMETTANT D'ATTIRER DES INSECTES LÉPIDOPTÈRES

(30) Priority: 11.06.2015 NZ 70905015
(43) Date of publication of application: 25.04.2018
(73) Proprietor: The New Zealand Institute For Plant And Food Reseach Limited, Mt Albert, Auckland 1025 (NZ)
(72) Inventor: EL-SAYED, Ashraf M., Bromley, Christchurch 8062 (NZ)
(74) Representative: Mewburn Ellis LLP
(86) International application number: PCT/NZ2016/050096
(87) International publication number: WO 2016/200279

(56) References cited:
- EP-A1- 1 285 580
- WO-A1-00/16616
- WO-A1-00/16616
- CN-B- 103 070 171
- CN-C- 1 283 149
- US-A1- 2005 042 316
- ASHVINI BHOSALE ET AL: "Selective hydrogenation of benzyl cyanide to 2-phenylethylamine over a Pd/Al 2 O 3 catalyst promoted by synergistic effects of CO 2 and water", GREEN CHEMISTRY, vol. 17, no. 2, 28 November 2014 (2014-11-28), pages 1299-1307, XP055516482, GB ISSN: 1463-9262, DOI: 10.1039/C4GC02118E
- MARTINUS E. HUIGENS ET AL: "Risk of Egg Parasitoid Attraction Depends on Anti-aphrodisiac Titre in the Large Cabbage White Butterfly Pieris brassicae", JOURNAL OF CHEMICAL ECOLOGY., vol. 37, no. 4, 31 March 2011 (2011-03-31) , pages 364-367, XP055516362, NL ISSN: 0098-0331, DOI: 10.1007/s10886-011-9935-2
- PETER J. LANDOLT: "New Chemical Attractants for Trapping <I>Lacanobia subjuncta,</I> <I>Mamestra configurata,</I> and <I>Xestia c-nigrum</I> (Lepidoptera: Noctuidae)", JOURNAL OF ECONOMIC ENTOMOLOGY, vol. 93, no. 1, 1 February 2000 (2000-02-01), pages 101-106, XP055516241, LANDHAM,MD,US ISSN: 0022-0493, DOI: 10.1603/0022-0493-93.1.101
- LANDOLT P J ET AL: "Positive Interaction of a Feeding Attractant and a Host Kairomone for Trapping the Codling Moth, Cydia pomonella (L.)", JOURNAL OF CHEMICAL ECOLOGY, KLUWER ACADEMIC PUBLISHERS-PLENUM PUBLISHERS, NE, vol. 33, no. 12, 9 November 2007 (2007-11-09), pages 2236-2244, XP019553390, ISSN: 1573-1561, DOI: 10.1007/S10886-007-9391-1
- KENNETH F. HAYNES ET AL: "Identification of floral compounds fromAbelia grandiflora that stimulate upwind flight in cabbage looper moths", JOURNAL OF CHEMICAL ECOLOGY., vol. 17, no. 3, 1 March 1991 (1991-03-01), pages 637-646, XP055516344, NL ISSN: 0098-0331, DOI: 10.1007/BF00982132
- TASIN, M. ET AL.: 'Volatiles that encode host-plant quality in the grapevine moth' PHYTOCHEMISTRY vol. 72, 2011, pages 1999 - 2005, XP028294894
- BECK, J. J. ET AL.: 'Comparison of the volatile emission profiles of ground almond and pistachio mummies: Part 2 - Critical changes in emission profiles as a result of increasing the water activity' PHYTOCHEMISTRY LETTERS vol. 8, 2014, pages 220 - 225, XP055333311
- FITZPATRICK, S. M. ET AL.: 'Age-Specific Titer and Antennal Perception of Acetic Acid, a Component of Male Pseudaletia unipuncta (Haw.) Hairpencil Secretion' J. CHEM. ECOL. vol. 15, no. 2, 1989, pages 641 - 648, XP009507775
- TÓTH, M. ET AL.: 'Optimization of a Phenylacetaldehyde-Based Attractant for Common Green Lacewings (Chrysoperla carnea s.l.' J. CHEM. ECOL. vol. 35, no. 4, 2009, pages 449 - 458, XP019680891
- ZHU, J. ET AL.: 'Identification of Odors from Overripe Mango That Attract Vinegar Flies, Drosophila melanogaster' J. CHEM. ECOL. vol. 29, no. 4, 2003, pages 899 - 909, XP055333322

## Description

### 1. FIELD OF THE INVENTION

The invention provides systems and methods that can be used to attract target Lepidopterous insects, in particular, insects of the families Tortricidae, Geometridae and Noctuidae.

### 2. BACKGROUND OF INVENTION

The order Lepidoptera includes moths and butterflies which are essential participants in the natural ecosystem as pollinators and food for other animals.

However, many species cause problems in agriculture, as their larvae can consume huge amounts of live plant matter in a short time, causing massive damage to crops.

Leafrollers are a family of moths whose larvae tie leaves around themselves with silken threads and eat leaves and fruit from within this protective shelter. This causes unsightly blemishes on fruit and can lead to secondary disease, for example, causing rot in crops such as grapes. Leafrollers are found on a wide range of fruits and ornamental shrubs and trees.

The leafroller Light Brown Apple Moth (LBAM), *Epiphyas postvittana* (Lepidoptera: Tortricidae) is an important horticultural pest both in its native and introduced habitats in Australia, New Zealand, USA, and the UK. LBAM is best known as a pest insect for tree fruits, including apples, pears, citrus, peaches, nectarines, apricots, vines, berryfruit, and to a lesser extent for forestry, vegetable, and flower crops.

The habitat of the LBAM continues to expand, with insects now confirmed in California and Europe. Methods of trapping and/or killing LBAM and other leafroller insects are needed to reduce the damage caused to important crops.

For most lepidopterous species, reproductive behaviour consists of the female releasing a volatile sex pheromone that elicits upwind flight in males of the same species. The males orient to the source to effect copulation. Since most lepidopterous species use many of the same pheromone compounds for sexual communication, multi-component blends can be critical for species specificity.

Sex pheromones are widely used as insect attractants, often in combination with a killing agent, such as an insecticide. However, the majority of sex pheromones attract only male insects, so are limited in effectiveness. Just one female insect can lay enough eggs to infest a large area, so it would be advantageous to provide an attractant for lepidopterous insects that attracted both sexes.

It is therefore an object of the invention to provide systems and methods for attracting Lepidopterous insects, in particular, insects of the families Tortricidae, Geometridae and Noctuidae, or to at least provide the public with a useful choice.

### 3. SUMMARY OF THE INVENTION

In a first aspect the invention provides a system for detecting, surveying, monitoring and/or controlling Lepidopterous insects comprising:
(a) a dispenser which dispenses a vapour blend of acetic acid and one or more compounds of formula I, 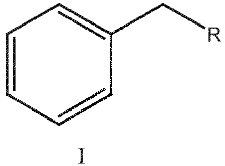 wherein R is selected from the group comprising -CN and -NC; and
(b) a trapping device.

In one embodiment, the system comprises a killing agent.

In a second aspect, the invention provides a method of attracting Lepidopterous insects to a location, the method comprising placing at the location a composition comprising a vapour blend of acetic acid and one or more compounds of formula I, as shown above, wherein R is selected from the group comprising -CN, -NC, -CH₂OH and -OH.

In a third aspect, the invention provides a method for detecting, surveying, monitoring and/or controlling Lepidopterous insect populations in an area comprising: placing in the area, a system of the first aspect of the invention.

In one embodiment, the system comprises a killing agent.

In the above aspects:
In one embodiment, the Lepidopterous insect is an insect of one of the families selected from Tortricidae, Geometridae and Noctuidae.
In one embodiment, the Lepidopterous insect is an insect of the family Tortricidae, preferably a leaf roller insect, more preferably, the LBAM.
In one embodiment, the Lepidopterous insect is female.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

In addition, where features or aspects of the invention are described in terms of Markush groups, those persons skilled in the art will appreciate that the invention is also thereby described in terms of any individual member or subgroup of members of the Markush group.

As used herein "(s)" following a noun means the plural and/or singular forms of the noun.

As used herein the term "and/or" means "and" or "or" or both.

### 4. BRIEF DESCRIPTION OF THE FIGURES

The invention is now described with reference to the figures in which:

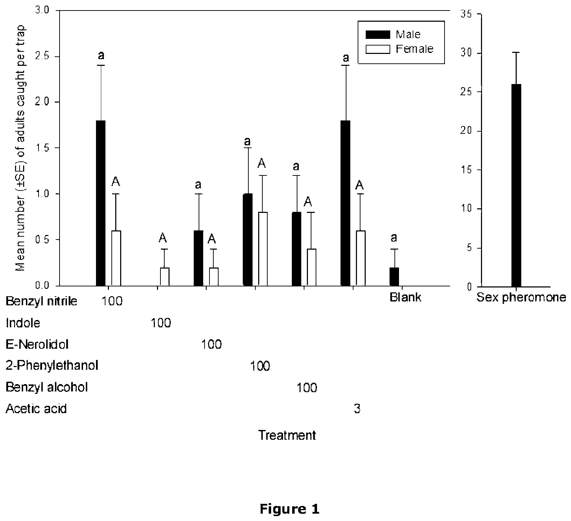

**Figure 1** is a graph showing the attraction of male and female LBAM, to six specific volatile compounds tested in apple orchards, as described in Example 1A. Loading of the first five compounds is in mg, while loading of acetic acid is in mL. Treatments labelled with the same case letters are not significantly different (P > 0.05). Treatments that caught no moths were not included in the analyses.

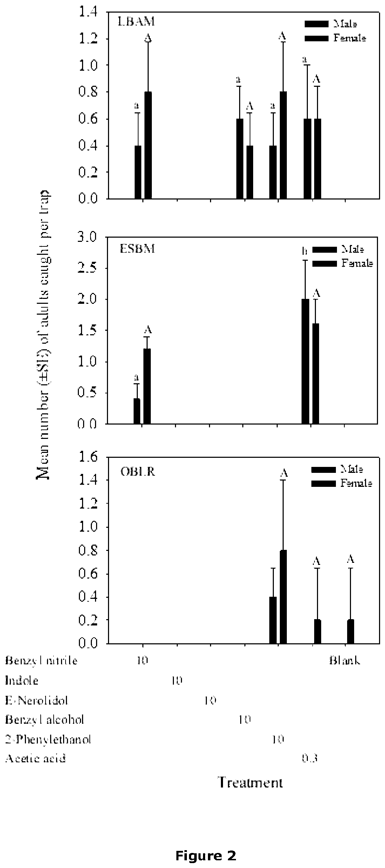

**Figure 2** is a graph showing the mean (±SE) of the total number of male and female LBAM, ESBM, and OBLR caught in traps baited with six compounds in apple orchards, as described in Example 1B. Loading of the first five compounds is in mg, while loading of acetic acid is in mL. Treatments labelled with the same case letters are not significantly different (P > 0.05). Treatments that caught no moths were not included in the analyses.

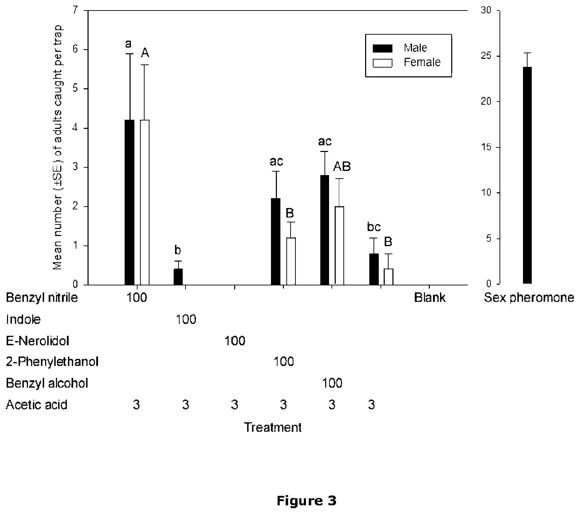

**Figure 3** is a graph showing the mean (±SE) of the total number of male and female LBAM caught in traps baited with two component blends containing 100 mg of each compound plus 3 mL of acetic acid, as described in Example 2A. Treatments labelled with the same case letters are not significantly different (P > 0.05). Treatments that caught no moths were not included in the analyses.

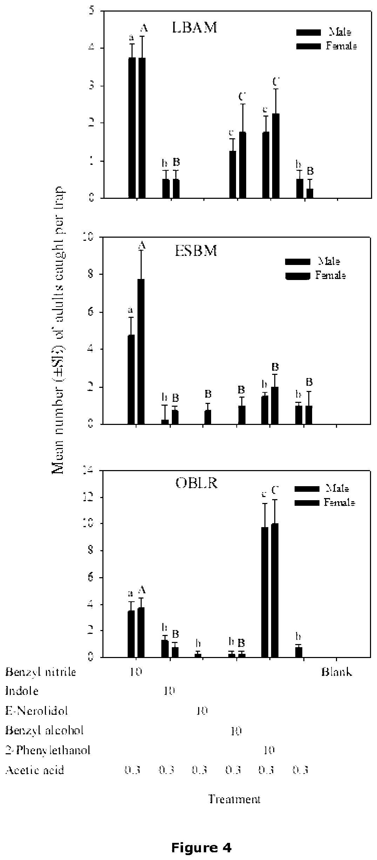

**Figure 4** is a graph showing the mean (±SE) of the total number of male and female LBAM, ESBM, and OBLR caught in traps baited with binary blends containing 10 mg of each compound + 0.3 mL of acetic acid, as described in Example 2B. Treatments labelled with the same case letters are not significantly different (P > 0.05). Treatments that caught no moths were not included in the analyses.

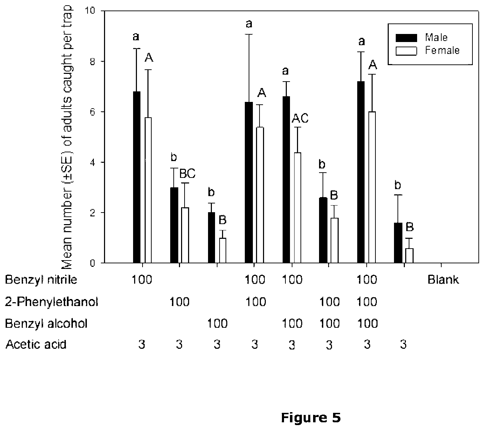

**Figure 5** is a graph showing the mean (±SE) of the total number of male and female LBAM caught in traps baited with various compositions as disclosed herein (amount of the compounds in mg, while acetic acid in mL), as described in Example 3A. Treatments labelled with the same letters are not significantly different (P > 0.05). Treatments that caught no moths were not included in the analyses.

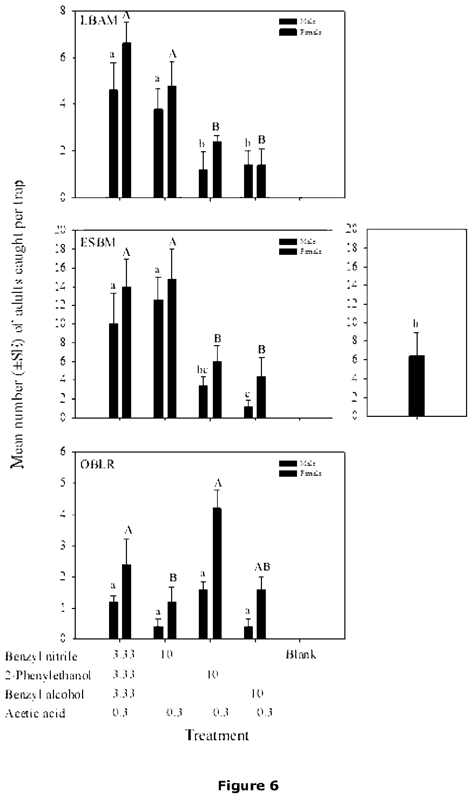

**Figure 6** is a graph showing the mean (±SE) of the total number of male and female males LBAM, ESBM, and OBLR caught in traps baited with compositions as disclosed herein (a quaternary blend and three binary blends), as described in Example 3B. Loading of the first three compounds are in mg, while loading of acetic acid is in mL. Treatments labelled with the same case letters are not significantly different (P > 0.05).

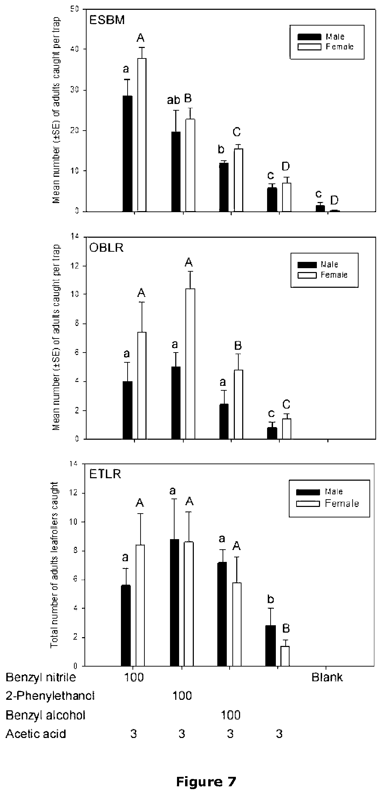

**Figure 7** is a graph showing the mean (±SE) of the total number of male and female ESBM, OBLR, and ETLR caught in traps baited with compositions as disclosed herein (three binary blends containing 100 mg of the three compounds of the invention plus 3 mL of acetic acid), as described in Example 4. Traps baited with 3 mL acetic acid and blank traps were used as control. Treatments labelled with the same case letters are not significantly different (P > 0.05).

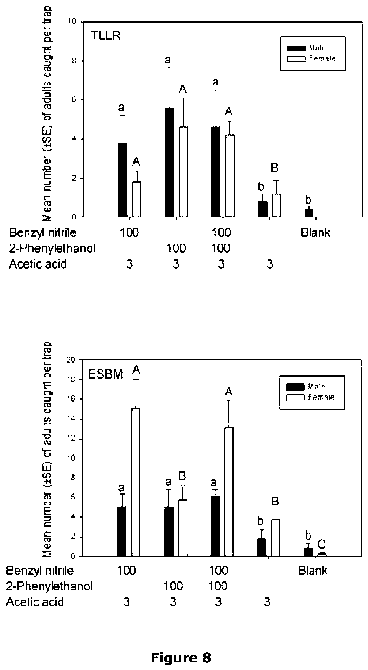

**Figure 8** is a graph showing the mean (±SE) of the total number of male and female ESBM and TLLR caught in traps baited with compositions as disclosed herein comprising one or two compounds of formula I and acetic acid, as described in Example 5. Traps baited with 3 mL acetic acid and blank traps were used as control. Treatments labelled with the same case letters are not significantly different (P > 0.05).

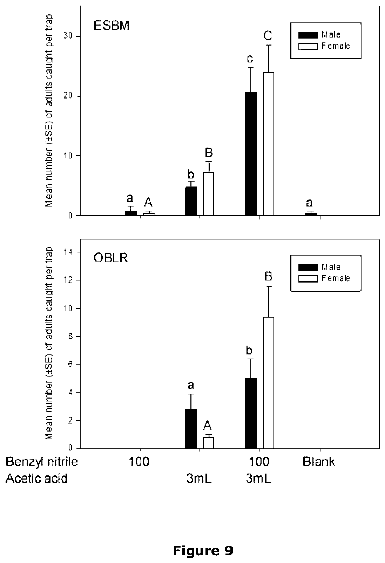

**Figure 9** is a graph showing the mean (±SE) of the total number of male and female ESBM and OBLR, caught in traps baited with, 1) 100 mg benzyl nitrile; 2) 3 mL acetic acid; 3) a binary blend of 100 mg benzyl nitrile and 3 mL acetic acid, as described in Example 6A. Treatments labelled with the same case letters are not significantly different (P > 0.05).

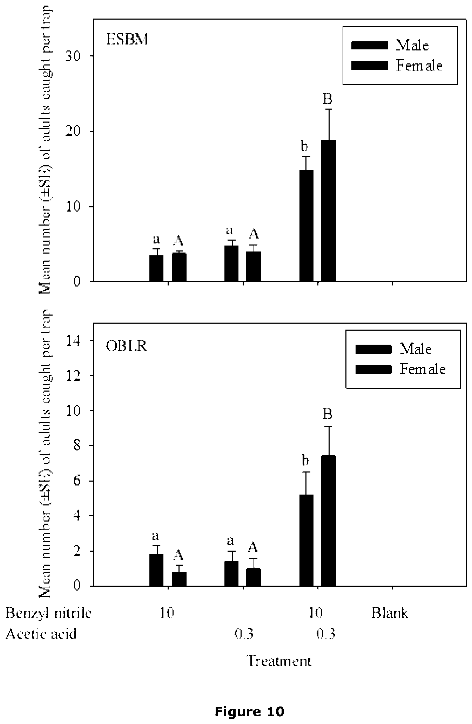

**Figure 10** is a graph showing the mean (±SE) of the total number of male and female of ESBM and OBLR, caught in traps baited with, 1) 10 mg benzyl nitrile; 2) 0.3 mL acetic acid; and 3) a binary blend of 10 mg benzyl nitrile + 0.3 mL acetic acid, as described in Example 6B. Treatments labelled with the same case letters are not significantly different (P > 0.05).

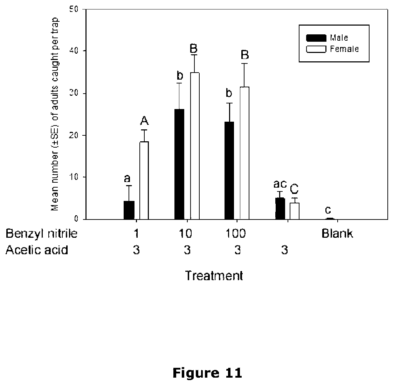

**Figure 11** is a graph showing the mean (±SE) of the total number of male and female ESBM caught in traps baited with binary blend containing a constant amount (3 mL) of acetic acid and varying amounts of benzyl nitrile (1, 10, 100 mg), as described in Example 7A. Treatments labelled with the same case letters are not significantly different (P > 0.05).

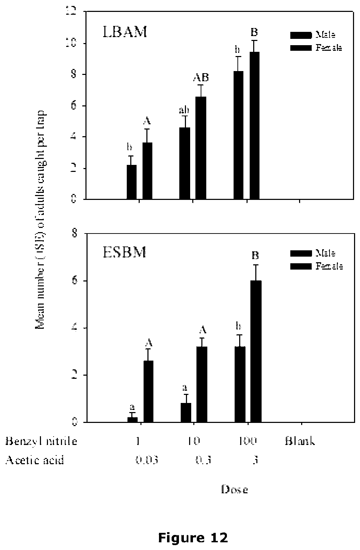

**Figure 12** is a graph showing the mean (±SE) of male and female of ESBM and LBAM, caught in traps baited with a binary blend containing three doses of benzyl nitrile + acetic acid (1:0.03, 10:0.3, 100:3 mg:mL), as described in Example 7B. Treatments labelled with the same case letters are not significantly different (P > 0.05).

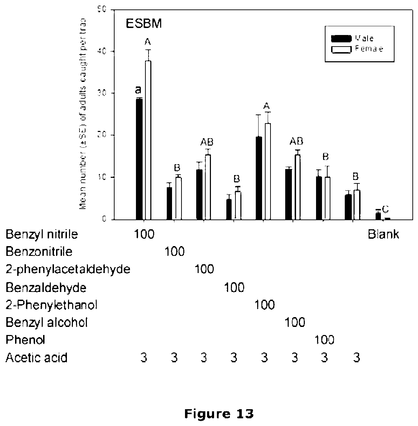

**Figure 13** is a graph showing the mean (±SE) of the total number of male and female ESBM caught in traps baited with binary blend containing 100 mg of each compounds plus 3 mL of acetic acid, as described in Example 8. Treatments labelled with the same letters are not significantly different (P > 0.05). Treatments that caught no moths were not included in the analyses.

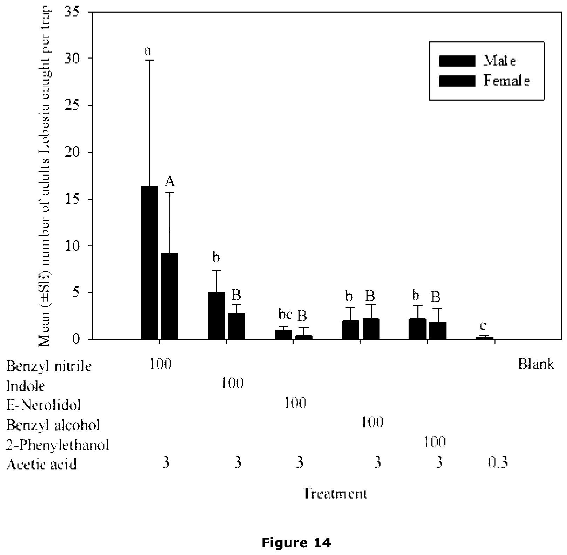

**Figure 14** is a graph showing the mean (±SE) of the total number of male and female European grapevine moth (*Lobesia botrana*) caught in traps baited with two component blend containing 100 mg of each HIPV compound plus 3 mL of acetic acid, as described in Example 9. Treatments labelled with the same case letters are not significantly different (P > 0.05). Treatments that caught no moths were not included in the analyses.

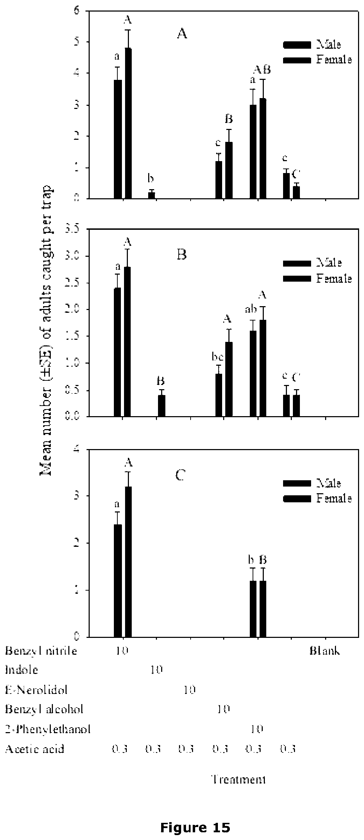

**Figure 15** is a graph showing the mean (±SE) of the total number of male and female of *Planotortrix octo* (A), *Ctenopseustis obliquana* (B), and *Ctenopseustis herana* (C) caught in traps baited with binary blends containing 10 mg of each HIPV compound + 0.3 mL of acetic acid. Treatments labelled with the same case letters are not significantly different (P > 0.05). Treatments that caught no moths were not included in the analyses.

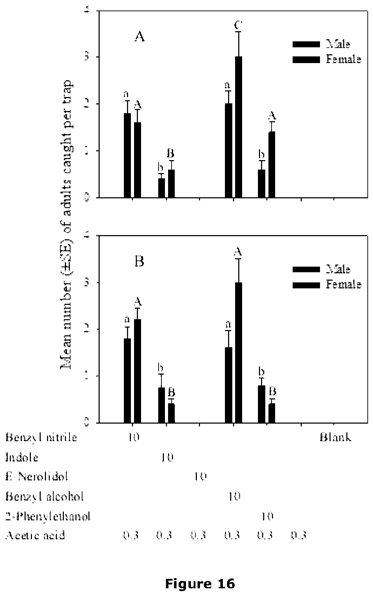

**Figure 16** is a graph showing the mean of the total number of male and female of *Graphania spp.* (A), and *Tmetolophota spp.* (B) caught in traps baited with binary blends containing 10 mg of each HIPV compound + 0.3 mL of acetic acid. Treatments labelled with the same case letters are not significantly different (P > 0.05). Treatments that caught no moths were not included in the analyses.

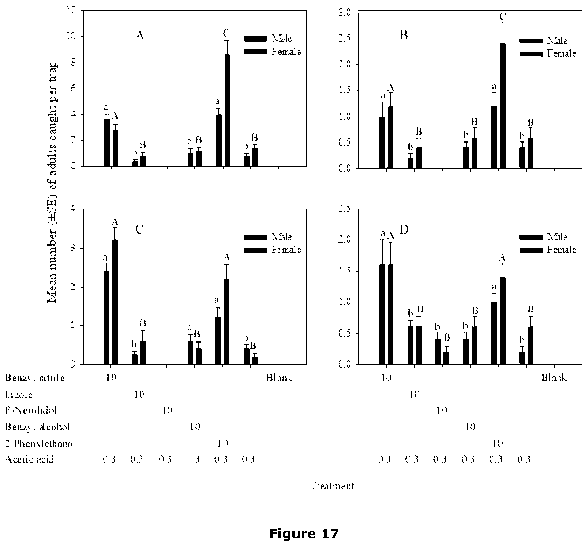

**Figure 17** is a graph showing the mean of the total number of male and female of the pandemis leafroller moth, *Pandemis pyrusana* (A), the three-lined leafroller, *Pandemis limtata* (B), the European leafroller, *Archips rosanus* (C) and the fruit-tree leafroller moth, *Archips argyrospila* (D) caught in traps baited with binary blends containing 10 mg of each HIPV compound + 0.3 mL of acetic acid. Treatments labelled with the same case letters are not significantly different (P > 0.05). Treatments that caught no moths were not included in the analyses.

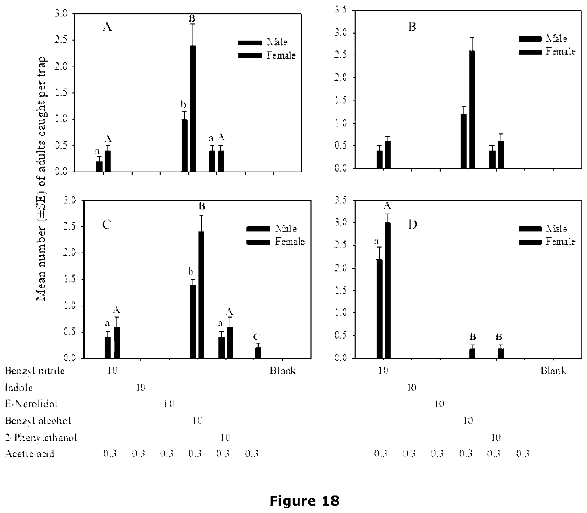

**Figure 18** is a graph showing the mean of the total number of male and female of *Abagrotis spp.* (A), *Euxoa spp.* (B), *Agrotis spp.* (C) and *Anavitrinella spp.* (D) caught in traps baited with binary blends containing 10 mg of each HIPV compound + 0.3 mL of acetic acid. Treatments labelled with the same case letters are not significantly different (P > 0.05). Treatments that caught no moths were not included in the analyses.

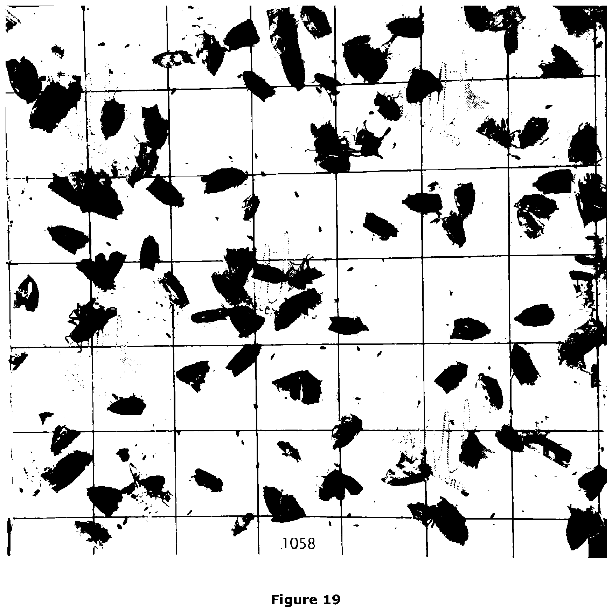

**Figure 19** is a photograph showing the leafroller females caught in traps baited with the composition as disclosed herein.

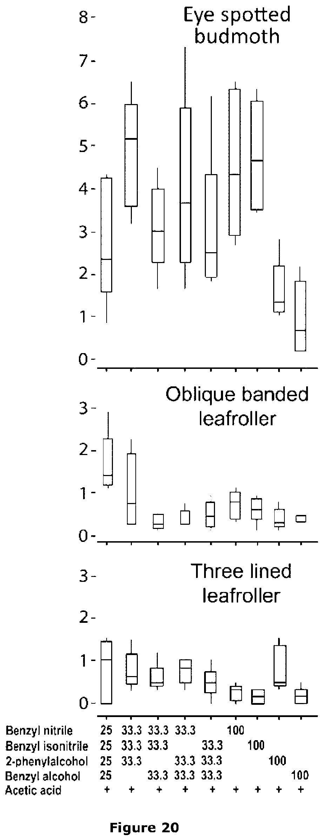

**Figure 20** is a boxplot of catch per trap per day of both sexes of three Lepidopterous insects.

### 5. DETAILED DESCRIPTION OF THE INVENTION

As used herein, the term "pheromone" or sex pheromone" means an intraspecific signal molecule, typically in Lepidoptera, produced and released by female insects at the time of, or prior to mating, that attracts males.

The term 'comprising' as used in this specification and claims means 'consisting at least in part of'. When interpreting statements in this specification and claims which include the term 'comprising', other features besides the features prefaced by this term in each statement can also be present. Related terms such as 'comprise' and 'comprised' are to be interpreted in similar manner.

The inventors have surprisingly discovered that a vapour blend of acetic acid and one or more of compounds selected from the group comprising benzyl nitrile, 2-phenylethanol and benzyl alcohol, synergistically attracts Lepidopterous insects.

Accordingly, disclosed herein is a composition for attracting Lepidopterous insects comprising a vapour blend of acetic acid and one or more compounds of formula I 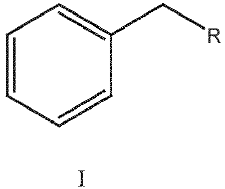 wherein R is selected from the group: -CH₂OH, -CN, -NC, and -OH.

All of the compounds of the composition (2-phenylalcohol, benzyl alcohol, benzyl nitrile and benzyl isonitrile) are volatile. While the compounds of formula I are attractants by themselves, combining them with acetic acid, greatly enhances the effect.

As seen in Examples 1A and 1B, compounds of formula I and acetic acid are weak attractants for many leafroller moths, with acetic acid demonstrating about the same or better attractant activity. However, when combined with acetic acid, each of the three compounds of formula I showed greatly enhanced activity (see Examples 2A and 2B). This synergistic attractant effect was seen in relation to several Lepidopterous insects, LBAM, ESBM and OBLR. In some cases, combining two or three compounds of formula I with acetic acid provided even greater attractant effect, as described in Examples 3a, 3B and 5.

The composition may provide a vapour blend of 2-phenylalcohol and acetic acid.

Alternatively, the composition may provide a vapour blend of benzyl alcohol and acetic acid.

Alternatively, the composition may provide a vapour blend of benzyl nitrile and acetic acid.

Alternatively, the composition may provide a vapour blend of benzyl isonitrile and acetic acid.

The composition may provide a vapour blend of two compounds of formula I and acetic acid.

The composition may provide a vapour blend of three compounds of formula I and acetic acid.

The composition may provide a vapour blend of all four compounds of formula I and acetic acid.

The compounds of formula I were found to be released by apple seedlings when infested by the larvae of LBAM. Rather than repelling adult moths as expected, these compounds were unexpectedly found to attract them. Other compounds released such as indole and (E)-nerolidol were found to have some attractant activity against some insects, but results were inconsistent.

Example 6A directly compares the effect of combining a compound of formula I (benzyl nitrile) with acetic acid, relative to use of each compound individually.

The acetic acid vapour can be provided by any compound or combination of compounds that produces volatilized acetic acid, for example, aqueous acetic acid, glacial acetic acid, acetic anhydride or ammonium acetate.

The composition disclosed herein are used to attract Lepidopterous insects to a location, by placing the composition at that location.

The Lepidoptous insect may be selected from insects of the Families Tortricidae, Geometridae and Noctuidae families. Preferably, the Lepidopterous insect is from the Tortricidae family, more preferably, a leafroller insect.

The Lepidopterous insect may be selected from the group comprising:
(a) the light brown apple moth: *Epiphyas postvittana* (LBAM);
(b) the eye spotted bud moth: *Spilonota ocellana* (ESBM);
(c) the oblique banded leafroller: *Choristoneura rosaceana* (OBLR);
(d) the pandemis leafroller: *Pandemis pyrusana* (PLR);
(e) the European tree leafroller: *Archips rosanus* (ETLR);
(f) the three lined leaf roller: *Pandemis limtata* (TLLR);
(g) the greenheaded leafroller: *Planotortrix octo*
(h) the brownheaded leafrollers: *Ctenopseustis obliquana* and *Ctenopseustis herana;*
(i) the fruit-tree leafroller: *Archips argyrospila;*
(j) the European grapevine moth: *Lobesia botrana;*
(k) the eastern spruce budworm: *Choristoneura fumiferana; and*
(l) the western spruce budworm: *Choristoneura occidentalis.*

Also disclosed herein is a system for detecting, surveying, monitoring and/or controlling Lepidopterous insect populations comprising: (a) a dispenser which dispenses a vapour blend of acetic acid and one or more compounds of formula I as defined above when R is -CN or NC, and (b) a trapping device.

The system includes a dispenser which contains or holds the un-volatilised compounds used to produce the vapour blend and also dispenses the vapour blend. The dispenser may hold and release the un-volatilised compounds separately which then form a vapour blend when they meet on release. Alternatively, the dispenser may contain both or all the compounds together, releasing them to form a vapour blend.

The dispenser may take many different forms. It may constitute an absorbent material that holds and releases the chemical, for example, cotton, paper, textiles, and polymeric matrices in the form of plugs or pellets.

Alternatively, the dispenser may constitute an impermeable membrane or wall that includes a small portion of permeable membrane or one or more small openings. The acetic acid and compounds of formula I are contained within the impermeable membrane or wall, and enter the atmosphere via the permeable membrane or small openings.

Examples of suitable dispensers are described in Leonhardt *et al.* (Insect Pheromone Technology: Chemistry and Applications, ACS Symposium Series 90, 1982).

In the trials described in the Examples, the compounds of formula I were placed inside a permeable polyethylene bag. The acetic acid was applied to a cotton ball inside a 5 ml polyethylene vial containing a 1 mm hole. The bag and vial were placed in the centre of a sticky trap.

As well as the rate at which the vapour blend is released, factors such as the insect population density, age distribution of the population, temperature and wind velocity may all influence the numbers of insects trapped. Therefore, the rate of release can be adjusted to account for these external factors.

The rate of release of the compounds can be adjusted by adjusting the dispenser for example, by allowing a bigger surface area to be exposed to the atmosphere. Factors such as temperature, and wind velocity will influence the release rate. The configuration of the system range can be readily determined by a dose response field test.

As long as there is a sufficient amount of each of the acetic acid and the compound of formula I to effectively contribute to the vapour blend, the actual amount of each compound present is less important than the rate at which the compounds are released.

Other compounds and materials may be added to the composition and system disclosed herein, provided they do not substantially interfere with the release of the vapour blend, or its attractant properties. Whether or not this occurs can be determined by standard test formats comparing the efficacy of the composition or system with and without the added compound or material.

The system disclosed herein may also include a sex pheromone, or kairomone. The sex pheromone or kairomone may be present in the dispenser, or could be released from another part of the system.

The system disclosed herein includes a trapping device. The trapping device can be any suitable device including but not limited to a sticky trap, unitrap, bucket trap and the like. The trapping device may be a sticky trap, such as a Delta trap.

The systems disclosed herein are useful for detecting, surveying, monitoring and/or controlling Lepidopterous insects. In use, the systems attract the insects, which are trapped in the trapping device component of the system, allowing them to be counted. Trapped insects can either be disposed of, if still alive when the system is checked, or the system can include a killing agent. In some cases the trapping device will constitute a killing agent.

Killing agents include, but are not limited to, insecticides, soapy water and the like.

The killing agent may be a carbomate, organophosphorous compound, nitrophenol, nitromethylene, phenylbenzoylurea, pyrethroid, chlorinated hydrocarbon or microbial insecticide. Preferably, the killing agent is a pyrethroid insecticide.

Systems disclosed herein can be widely distributed to detect the presence of the insects in a particular area. Insect populations can be surveyed by applying mathematical analyses to the results. Changes in populations over time can also be monitored by comparing results with earlier data. If initial results warrant it, mass trapping programmes can be initiated, to control population numbers.

The current means of monitoring the occurrence and levels of Lepidopterous insects is by use of pheromone baited traps. However, this only attracts male insects. The compositions and systems disclosed herein also attract female Lepidoptera insects, allowing development of new monitoring and control measures.

Although the present invention is broadly as defined above, those persons skilled in the art will appreciate that the invention is not limited thereto and that the invention also includes embodiments of which the following description gives examples.

### 6. EXAMPLES

### 6.1 Materials and methods

### Chemicals

The chemical purity of the standards used in the field experiments were as follows: Glacial acetic acid (99%), benzyl alcohol (99%), benzyl nitrile (99%) and 2-phenylethanol (99%). Glacial acetic acid was stored under ambient temperature while all other compounds were stored at -20°C until used. All chemicals were purchased from Sigma Aldrich (MO, USA).

### LBAM colony

A colony of LBAM was established and maintained at Mt. Albert Research Center (Auckland). Egg batches of *E. postvittana* were allowed to emerge in the laboratory. Apple seedlings (var. Royal Gala) were infested with ca. 30 1st or 2nd instar larvae per seedling and left for 24 h in the laboratory to enable larvae to settle. Upon making contact with the adaxial leaf surface, larvae orientated to a position on the abaxial surface where they webbed up along the midrib and began to feed on epidermal tissue. Visible signs of larval feeding were evident after 24 h. Infested and uninfested apple seedlings were used to provide volatile odour profiles by air entrainment and in the greenhouse trials. Pupae from the colony were sexed and adult males were allowed to emerge in isolation from the females. Emerging adults were used to produce mated females for the shade house bioassay. One female and three males were confined in a plastic container for one night and monitored with a time lapse video system. Females and males were considered mated when they were observed in copula for more than one minute. Adults were kept at 22 ±2°C, 18L:6D, they were provided with water and were 2-3 days old at the time of testing.

### Field Experimental Protocol for LBAM, ESBM and OBLR trials

All field experiments targeting LBAM were conducted in a 'Red Delicious' apple orchard (43°38'55.39"S, 172°27'17.57"E) in Canterbury, the South Island, New Zealand.

All these experiments targeting ESBM and OBLR were conducted in a mixed variety organic apple orchard (49°10'43.98°N, 119°45'16.8"W) in Karamus, British Columbia, Canada, unless stated otherwise.

Red delta traps made of plastic corflute with an adhesive-coated base (Suckling and Shaw, 1992) were used in the LBAM trials while large white deltra traps (Pherocan VI, Trécé, Adair, OK) were used for ESBM and OBLR trials.

Traps were baited with the composition described herein and placed in 5 rows, with five replicates of each treatment in a randomized block design. Traps were positioned 1.7 m above the ground in each trap tree, and were spaced 20 m apart in each row. Each treatment was assigned randomly to a trap tree within each row of trees. Both the polyethylene sachet containing the compound of formula I and the acetic acid vial were placed in the center of the sticky base in the LBAM trials. In the ESBM and OBLR trials they were attached to the side of the traps using velcro tape. Sticky bases were checked and counted weekly during the experimental period.

### Data Analysis

The variance of mean captures obtained with each compound or each blend of compounds was stabilized using the √ (x + 1) transformation of counts and the significance of treatment effects tested using ANOVA. Significantly different treatment means were identified using Fisher's protected least significant difference test (SAS Institute Inc, 1998).

### 6.2 Example 1A: Testing individual compounds as attractants for LBAM

This experiment was conducted from the period between 15th of November 2013 to 8th of December 2013 to investigate the biological activity of the individual volatile organic compounds. Benzyl alcohol, benzyl nitrile, indole, 2-phenyethanol, and (E)-nerolidol were tested by dispensing 100 mg of each compound in a permeable polyethylene bag of 150 µm wall thickness (45 mm × 50 mm), with a piece of felt (15 mm × 45 mm) inserted as a carrier substrate.

An acetic acid lure was made by placing a 2-cm piece of cotton ball in a 5 ml polythene vial (JUST Plastics Ltd, UK) with a 1mm hole drilled in its lead. 3 ml of acetic acid was applied to the cotton ball inside the polythene vial. A trap with a blank lure was used as control. Five traps baited with LBAM sex pheromone were deployed in the vicinity (>30 m) of the trial to ensure the presence of the insect.

**Results:** When the six compounds were tested individually for the attraction of adult LBAM, the number of males or females LBAM caught was not significantly different to treatments that are known to attract moths (see Figure 1; Treatment, *F*_{15,24} = 1.3, P > 0.3 for male, and *F*_{15,24} = 0.67, P > 0.67). Sex pheromone traps deployed in the vicinity of the trial, caught an average of 26 males per trap, indicating the presence of LBAM in the orchard during the course of the trial.

### 6.3 Example 1B: Testing individual compounds as attractants for LBAM, ESBM and OBLR

This experiment was conducted from 28 November to 12 December 2013 for LBAM and 3-10 June 2015 for ESBM and OBLR to investigate the biological activity of the individual volatile organic compounds. Lures of benzyl alcohol, benzyl nitrile, indole, 2-phenyethanol, (E)-nerolidol, and 0.3 mL acetic acid were made by dispensing 10 mg of each compound on a Boomerang regular cellulose acetate filter (7.5 mm diameter × 10 mm, Moss Packaging Co. Ltd., Wellington, New Zealand) inside a permeable polyethylene bag (100 µm wall thickness, 20 mm × 20 mm, Masterton, New Zealand) that was then heat-sealed. A trap with a lure without chemical was used as negative control.

**Results:** When the six compounds were tested individually for the attraction of adult LBAM, only benzyl nitrile, benzyl alcohol, 2-phenylethanol, and acetic acid attracted males and females into the traps but with no significant differences among treatments (see Figure 2 Treatment, *F*_{3,16} = 0.16, P = 0.92 for male, *F*_{3,16} = 0.37, P = 0.78 for female). No moths were caught in blank traps. For ESBM, only benzyl nitrile and acetic acid attracted males and females into the traps with no significant differences among treatments (*F*_{1,8} = 5.6, P = 0.046 for male, and *F*_{1,8} = 0.8, P = 0.40 for female, Figure 2). No ESBM moths were caught in blank traps. For OBLR, only traps baited with 2-phenylethanol attracted males and females, however there were no significant differences among treatments and blank control in the attraction of OBLR females (*F*_{2,12} = 1.16, P = 0.35 for female, Figure 2).

### 6.4 Example 2A: Testing binary blends of compounds as attractants for LBAM

This experiment was conducted between 10th of December 2013 to 24th of January 2014 investigating binary blends of the compounds tested in Example 2. The loadings of blends were as follow: 1) 100 mg of benzyl alcohol and 3 mL acetic acid; 2) 100 mg benzyl nitrile and 3mL acetic acid; 3) 100 mg indole and 3mL acetic acid; 100 mg of 2-phenyethanol and 3 mL acetic acid; and 100 mg (E)-nerolidol and 3mL acetic acid. A trap with a blank lure was used as control and traps baited with 3 mL of acetic acid were used to quantify the role of acetic acid. Five traps baited with the sex pheromone were deployed in the vicinity of the trial to ensure the presence of the insect.

**Results:** The composition of the binary blends significantly affected the number of LBAM males and females captured (Treatment, *F*_{4,20} = 3.8, P < 0.02 for male, and *F*_{3,16} = 3.02, P < 0.05 for female). The greatest number of adult moths were captured in traps baited with benzyl nitrile/acetic acid (see Figure 3). E)-nerolidol/acetic acid and blank traps caught no moths.

### 6.5 Example 2B: Testing binary blends of compounds as attractants for LBAM, ESBM and OBLR

A second field experiment was conducted between 15 December 2014 to 13 January 2015 for LBAM and from 12 to 23 June 2105 for ESBM and OBLR to investigate binary blends of the most attractive compounds obtained in the first trial. The loadings of the five compounds were prepared similar to the first experiment as follows: 1) 10 mg benzyl alcohol + 0.3 mL acetic acid; 2) 10 mg benzyl nitrile and 0.3mL acetic acid; 3) 10 mg indole + 0.3 mL acetic acid; 4) 10 mg 2-phenyethanol + 0.3 mL acetic acid; and 5) 10 mg (E)-nerolidol and 0.3mL acetic acid. A trap baited with 0.3 mL of acetic acid alone and a blank lure were used as controls.

The composition of the binary blends significantly increased the number of LBAM, ESBM and OBLR males and females captured (LBAM: Treatment, *F*_{4,20} = 9.2, P < 0.001 for male, and *F*_{4,20} = 8.32, P = 0.004 for female; ESBM: Treatment, *F*_{3,16} = 10.4, P < 0.001 for male, and *F*_{5,24} = 16.29, P < 0.001 for female; OBLR: Treatment, *F*_{5,24} = 19.6, P < 0.001 for male, and *F*_{3,16} = 15.33, P < 0.001 for female), as shown in Figure 4. The greatest numbers of LBAM and ESBM adult moths were captured in traps baited with benzyl nitrile + acetic acid, while the greatest numbers of OBLR adult moths were captured in traps baited with 2-phenylethanol + acetic acid (Figure 4). For LBAM, the catches in traps baited with the two binary blends including 2-phenylethanol + acetic acid and benzyl alcohol + acetic acid were significantly different from traps baited with acetic acid alone (Figure 4, P < 0.001). The catches in traps baited with indole + acetic acid were not significantly different from traps baited with acetic acid alone (Figure 4). (E)-nerolidol + acetic acid baited traps caught no moths. For ESBM, the catches with the four binary blends including 2-phenylethanol + acetic acid, benzyl alcohol + acetic acid, indole + acetic acid, and (E)-nerolidol + acetic were not significantly different from traps baited with acetic acid alone (Figure 4). For OBLR, the catches in traps baited with the binary blend containing benzyl nitrile + acetic acid were significantly different from traps baited with acetic acid alone (Figure 4, *P* < 0.001). The catches of adult moths in traps baited with benzyl alcohol + acetic acid, indole + acetic acid, and (E)-nerolidol + acetic were not significantly different from traps baited with acetic acid alone (Figure 4, *P* >0.05).

### 6.6 Example 3A: Testing various blends of compounds as attractants for LBAM

This experiment was conducted between 27th of January 2014 to 18th of February 2014 investigating the various blends based on results obtained in Example 2. The loadings of the five volatile blends were: 1) 100 mg of benzyl nitrile and 3 mL acetic acid; 2) 100 mg of 2-phenylethanol and 3 mL acetic acid; 3) 100 mg of benzyl alcohol and 3 mL acetic acid; 4) 100 mg of benzyl nitrile, 100 mg of 2-phenylethanol, and 3 mL acetic acid; 5) 100 mg of benzyl nitrile, 100 mg of 2-phenylmethanol, and 3 mL acetic acid; 6) 100 mg of 2-phenylethanol, 100 mg of benzyl alcohol and 3 mL acetic acid; 7) benzyl nitrile, 100 mg of 2-phenylethanol, 100 mg of benzyl alcohol, and 3 mL acetic acid. A trap with a blank lure was used as negative control while traps baited with 3 mL of acetic acid were used to quantify the role of acetic acid.

**Results:** The composition of the blends significantly affected the number of adult males and female LBAM attracted to the odour source (Treatment, *F*_{7,32} = 2.97, P < 0.02 for male, and *F*_{7,32} = 4.36, P < 0.02 for female). The four blends containing benzyl nitrile (binary, ternary and quaternary) attracted significantly more adult moths than the two binary blends (2-phenylethanol/acetic acid, benzyl alcohol/acetic acid) or the ternary blend (2-phenylethanol/ benzyl alcohol/acetic acid - see Figure 5). On the other hand, there was no significant difference between the four blends containing benzyl nitrile (Figure 5).

### 6.7 Example 3B: Testing of various blends of compounds as attractants for LBAM, ESBM and OBLR

This experiment was conducted between the 15-28 January 2015 for LBAM and from 26 June to 6 July 2105 for ESBM and OBLR. The four volatile blends were: 1) 3.33 mg benzyl nitrile, 3.33 mg 2-phenylethanol, 3.33 mg benzyl alcohol + 0.3 mL acetic acid; 2) 10 mg benzyl nitrile + 0.3 mL acetic acid; 3) 10 mg 2-phenylethanol + 0.3 mL acetic acid; 4) 10 mg benzyl alcohol + 0.3 mL acetic acid. A trap with a blank lure was used as negative control, while traps baited with the sex pheromone of ESBM (Trécé Inc, Adair, OK) were used as positive control.

**Results:** The composition of the blends significantly affected the number of adult male and female LBAM attracted to odour sources, as shown in Figure 6 (LBAM: Treatment, *F*_{3,16} = 4.3, P = 0.021 for male, and *F*_{3,16} = 9.12, P < 0.001 for female; ESBM: Treatment, *F*_{4,20} = 4.5, P = 0.009 for male, and *F*_{3,16} = 4.4, P = 0.019 for female; OBLR: Treatment, *F*_{3,16} = 6.5, P = 0.004 for male, and *F*_{3,16} = 5.1, P = 0.012 for female). The four blends containing benzyl nitrile (binary, ternary and quaternary) attracted significantly more adult moths than the two binary blends (2-phenylethanol + acetic acid, benzyl alcohol + acetic acid) or the ternary blend (2-phenylethanol + benzyl alcohol + acetic acid) (Figure 6). On the other hand, there were no significant differences among the four blends containing benzyl nitrile (Figure 6). Both the quaternary blend and binary blend containing benzyl nitrile + acetic acid attracted significantly more ESBM males than traps baited with sex pheromone (P < 0.05, Figure 6).

### 6.8 Example 4: Testing binary blends of compounds as attractants for ESBM, OBLR and ETLR

This experiment was conducted between the 11th to the 22nd of July 2014 in a mixed variety organic apple orchard in Summerland, British Columbia, Canada. Large white delta traps (Trece Inc) were used. The loadings of blends were as follow: 1) 100 mg benzyl nitrile and 3mL acetic acid; 2) 100 mg of 2-phenyethanol and 3 mL acetic acid; 3) 100 mg benzyl alcohol and 3mL acetic acid. Traps baited with 3 mL of acetic acid was used to quantify the role of acetic acid. A trap with a blank lure was used as negative control. Traps were baited with the compound of formula I and placed in 5 rows, with five replicates of each treatment in a randomized block design. Traps were positioned 1.5 m above the ground in each trap tree, and were spaced 20 m apart in each row. Each treatment was assigned randomly to a trap tree within each row of trees. The polythene sachet and the acetic acid vial were attached to the side of the traps using Velcro tape. Sticky bases were checked weekly during the experimental period.

**Results:** The binary blend of benzyl nitrile/acetic acid attracted significantly more ESBM females than a binary blend of 2-phenylethanol/acetic acid or benzyl alcohol/acetic acid (see Figure 7). On the other hand, blends of benzyl nitrile/acetic acid or 2-phenylethanol/acetic acid attracted significantly more ESBM males than benzyl alcohol/acetic acid.

The response of OBLR to the same binary blends differed from the response of ESBM. The two binary blends of benzyl nitrile/acetic acid and 2-phenylethanol/acetic acid significantly attracted more female OBLR than benzyl alcohol/acetic acid. Males OBLR responded equally to the three binary blends tested.

In addition to ESBM and OBLR, the compositions also attracted ETLR. The three binary blends caught significantly more ETLR males and females than acetic acid alone (see Figure 7).

### 6.9 Example 5: Testing binary and ternary blends of compounds as attractants for ESBM and TLLR

This trial was conducted in a mixed variety apple orchard in Summerland, British Columbia, Canada from 28th of July to 11th of August 2014 targeting ESBM and threelined leaf rollers (TLLR). The following treatments were tested, 1) 100 mg of benzyl nitrile and 3 mL acetic acid; 2) 100 mg of 2-phenylethanol and 3 mL acetic acid; 3) 100 mg of benzyl nitrile, 100 mg of 2-phenylethanol, and 3 mL acetic acid. A trap with a blank lure was used as negative control while traps baited with 3 mL of acetic acid was used as quantify the role of acetic acid. The traps were baited with the composition described herein and placed in 5 rows, with five replicates of each treatment in a randomized block design. Traps were positioned 1.5 -2 m above the ground in each trap tree, and were spaced 20 -30 m apart in each row. Each treatment was assigned randomly to a trap tree within each row of trees. White delta traps (Trece Inc) were used.

**Results:** The addition of 2-phenylethanol to a binary blend of benzyl nitrile/acetic acid did not result in significant increase in the number of males and females in either species (see Figure 8). Both binary blend benzyl nitrile/acetic and 2-phenylethanol/acetic acid blends caught similar number of males and females of TLLR. In contrast blends containing benzyl nitrile caught more male and female ESBM than 2-phenylethanol/acetic acid blend.

### 6.10 Example 6A: Testing synergism between benzyl nitrile and acetic acid for ESBM and OBLR

This experiment was conducted between 3rd of July to 17th of July 2014 in a mixed variety organic apple orchard in Summerland, British Columbia, Canada using the same experimental protocol as Example 4. The trial targeted both ESBM and OBLR. The relative attractiveness of the following treatments was investigated: 1) 100 mg benzyl nitrile alone; 2) 3 mL acetic acid alone; and 3) 100 mg of benzyl nitrile and 3 mL acetic acid. A trap with a blank lure was used as negative control.

**Results:** The composition of the blends significantly affected the number of adult male and female ESBM and OBLR attracted to the odour source (Treatment, *F*_{3,16} = 18.64, P < 0.001 for male ESBM; *F*_{2,12} = 18.52, P < 0.001 for female ESBM). Benzyl nitrile alone was not attractive to adults ESBM or OBLR (see Figure 9). In contrast, acetic acid alone significantly attracted more males and females than traps baited with benzyl nitrile alone. For ESBM, the addition of benzyl nitrile to acetic acid resulted in 4 and 3 fold increases in the number of males and females caught respectively. For OBLR, the addition of benzyl nitrile to acetic resulted in 2 and 9 fold increases in the number of males and females caught respectively.

### 6.11 Example 6B: Testing synergism between benzyl nitrile and acetic acid for ESBM and OBLR

This experiment was conducted from 21 June to 2 July 2015 only for ESBM and OBLR in a mixed varieties apple orchard in Summerland, British Columbia, Canada (49°34'50.02"N, 119°38'16.57"W). The relative attractiveness of the following treatments was investigated: 1) 10 mg benzyl nitrile alone; 2) 0.3 mL acetic acid alone; and 3) 10 mg benzyl nitrile + 0.3 mL acetic acid. A trap with a blank lure was used as negative control. Experimental protocol was similar to Example 1.

**Results:** In the trial to investigate the synergism between benzyl nitrile and acetic acid, the composition of the HIPV blends significantly affected the number of adult male and female ESBM and OBLR attracted to odour sources, as shown in Figure 10 (ESBM: Treatment, *F*_{2,12} = 23.4, P < 0.001 for male, and *F*_{2,12} = 12.49, P = 0.001 for female; OBLR: Treatment, *F*_{2,18} = 6.6, P = 0.007 for male, and *F*_{2,18} = 16.7, P < 0.001 for female). Benzyl nitrile and acetic acid attracted similar numbers of males and females of both species (Figure 10). The addition of benzyl nitrile to acetic resulted in significant increases in the number of males and females caught in both species (P <0.05, Figure 10). Benzyl nitrile and acetic acid each alone attracted similar numbers of ESBM or OBLR males and females (Figure 10).

### 6.12 Example 7A: Testing various doses of benzyl nitrile and acetic acid on ESBM

This experiment was conducted between 8th of July to 22nd of July 2014 in a mixed variety organic apple orchard in Summerland, British Columbia, Canada. This trial targeted ESBM. The relative attractiveness of three binary blends containing constant amount of acetic acid (3mL) plus varying amounts of benzyl nitrile (1, 10, and 100 mg) was investigated. Traps baited with a blank lure were used as a negative control, while traps baited with 3 mL of acetic acid was used to quantify the role of acetic acid. Experimental protocol was similar to Example 4.

**Results:** Varying the amount of benzyl nitrile while maintaining a constant amount of acetic acid in the binary blend significantly affected the number of male and female ESBM caught (Treatment, *F*_{3,16} = 5.1, P < 0.01 for male and *F*_{3,16} = 13.48, P < 0.001 for female). Increasing the dose of benzyl nitrile from 1 mg to 10 mg resulted in significant increase in the number of males and females caught (see Figure 11). However, further increase of benzyl nitrile from 10 mg to 100 mg did not result in a significant increase in the number of males and females. The response of males to a binary blend containing 1 mg of benzyl nitrile was not significant from acetic acid alone, while significantly more females were attracted to this dose compared to acetic acid alone.

### 6.13 Example 7B: Testing various doses of benzyl nitrile and acetic acid on LBAM, ESBM and OBLR

This experiment was conducted between the 30 January to 16 February 2014 for LBAM and from the 15 - 28 July 2105 for ESBM and OBLR. The relative attractiveness of three doses of binary blends containing (1+0.03; 10+0.3; and 100 mg+3 mL) of benzyl nitrile + acetic acid was investigated. Traps baited with a blank lure were used as a negative control. Experimental protocol was similar to Example 1.

**Results:** Varying the amount of benzyl nitrile + acetic acid in the binary blend significantly affected the number of males and females of LBAM and ESBM caught (LBAM: Treatment, *F*_{2,12} = 14.8, *P* < 0.001 for male, and *F*_{2,12} = 12.7, *P* = 0.001 for female; ESBM: Treatment, *F*_{2,12} = 18.1, *P* < 0.001 for male, and *F*_{2,12} = 10.9, *P* = 0.002 for female). Increasing the dose of benzyl nitrile from 1 mg + 0.0 3mL to 10 mg + 0.3 mL did not result in a significant increase in the number of males and females caught (Figure 12). However, a further increase of benzyl nitrile + acetic acid to 100 mg + 3 mL resulted in a significant increase in the number of ESBM and OBLR males and females caught compared to the two lower dosages (Fig, 12).

### 6.14 Example 8: Comparing attraction properties of compositions disclosed herein with other compounds

This experiment was conducted between the 28th of July to the 11th of August 2014 in a mixed variety organic apple orchard in Summerland, British Columbia, Canada. Large white delta traps (Trece Inc) were used. In addition to the biologically active compounds of formula I - benzyl nitrile, 2-phenyethanol, and benzyl alcohol, four structurally related compounds; benzonitrile, phenylacetaldhyde, benzaldehyde, and phenol were tested for biological activity (Figure 13). The following binary blends were tested: 1) 100 mg benzyl nitrile + 3mL acetic acid; 2) 100 mg benzonitrile + 3 ml acetic acid; 3) 100 mg phenylacetaldhyde + acetic acid; 4) 100 mg benzaldehyde + 3 mL acetic acid; 5) 100 mg of 2-phenyethanol + 3 mL acetic acid; 6) 100 mg benzyl alcohol + 3mL acetic acid; 7) 100 mg phenol + 3 mL acetic acid. Traps baited with 3 mL of acetic acid were used to quantify the role of acetic acid while a trap with a blank lure was used as negative control. Traps were baited with the volatile compounds and placed in 5 rows, with five replicates of each treatment in a randomized block design. Traps were positioned 1.5 m above the ground in each trap tree, and were spaced 20 m apart in each row. Each treatment was assigned randomly to a trap tree within each row of trees. The polythene sachet and the acetic acid vial were attached to the side of the traps using Velcro tape. Sticky bases were checked weekly during the experimental period.

**Results:** The largest number of males and females ESBM were caught in traps baited with 100 mg benzyl nitrile + 3 mL acetic acid. The second most attractive blend was 100 mg 2-phenylethanol + 3 mL acetic acid. The binary blends (100 mg phenylacetaldehyde or 100 mg benzyl alcohol and 3 mL acetic acid) caught similar number of adult moths (Figure 13). The catch in traps baited with the binary blends containing (100 mg of benzonitrile, or benzaldehyde, or phenol + 3 mL acetic acid) was not different from traps baited with acetic acid alone (Figure 13).

### 6.15 Example 9: Testing binary compositions of the European grapevine moth

This experiment was conducted between 30 July 2013 to 20 August 2013 in a vineyard (GPS), Verdú, Spain. The relative attractiveness of various binary blends of HIPV compounds was tested for generalist predators. The loadings of HIPV blends were as follows: 1) 100 mg benzyl nitrile and 3 mL acetic acid; 2) 100 mg indole and 3 mL acetic acid; 3) 100 mg (E)-nerolidol and 3mL acetic acid; 4) 100 mg 2-phenylethanol and 3 mL acetic acid; 5)100 mg benzyl alcohol and 3 mL acetic acid. A trap with a blank lure and 3 mL of acetic acid alone was used as control.

**Results:** The results are shown in Figure 14.

### 6.16 Example 10: Other lepidopterous insects attracted by binary blends

In the experiment set out in Example 2B, insects other than target insects LBAM, ESBM and OBLR that were caught in traps were counted.

**Results:** Response of other leaf feeding herbivores. In New Zealand, male and female leafroller, *Planotortrix octo,* as well as the brownheaded leafroller moths, *Ctenopseustis obliquana* and *Ctenopseustis herana* were caught mainly in traps baited with benzyl nitrile + acetic acid, 2-phenyletanol+ acetic acid and benzyl alcohol + acetic acid (Figure 15). In North America, males and females of other species of leafrollers including the three-lined leafroller, *Pandemis limtata,* the pandemis leafroller moth, *Pandemis pyrusana,* the European leafroller, *Archips rosanus,* and the fruit-tree leafroller moth, *Archips argyrospila,* were caught mainly in traps baited with benzyl nitrile + acetic acid and 2-phenyletanol+ acetic acid (Figure 17).

Moths in the genus *Pandemis* showed a preference toward 2-phenylethanol+ acetic acid while moths of the genus *Archips* showed a preference toward benzyl nitrile + acetic acid (Figure 17). The attraction phenomenon to binary blends of compounds of formula I was found as well in other families of moths. For example, the noctuids (Noctuidae) belonging to genera *Graphania,* and *Tmetolophota* were mainly caught in traps baited with benzyl nitrile + acetic acid and benzyl alcohol + acetic acid (Figure 16). Male and female leaf feeding noctuids belonging to genera *Abagrotis, Euxoa* and *Agrotis* were caught mainly in traps baited with benzyl alcohol + acetic acid (Figure 18). Male and female geomtrids (Geometridae), *Anavitrinella spp.* were caught in traps baited with benzyl nitrile + acetic acid (Figure 18).

### 6.17 Example 11: Five component and subtraction blends

This experiment was carried out between 1-15 July 2015 in apple orchids in Keremeos, British Columbia.

Lures were prepared in sachets, with acetic acid in a Nalgene vial (Thermo Fisher Scientific, Waltham, MA). Lures containing benzyl nitrile, benzyl isonitrile, benzyl alcohol and 2-phenyethanol were made by dispensing 10 mg of each compound on a Boomerang regular cellulose acetate filter (7.5 mm diameter × 10 mm, Moss Packaging Co. Ltd., Wellington, New Zealand) inside a permeable polyethylene bag (100 µm wall thickness, 20 mm × 20 mm, Masterton, New Zealand) that was then heat-sealed. A trap with a lure without chemical was used as negative control.

All four compounds of formula I (benzyl nitrile, benzyl isonitrile, 2-phenyl alcohol, and benzyl alcohol were added at equal proportions in the blend (25 mg each), with 0.3 mL of acetic acid in a separate Nalgene vial. The next four treatments were derived by subtracting each one of the four compounds so that only three remaining were added to the sachets each loaded at 33.3 mg, with a different compound missing from each treatment, present with acetic acid as above. An unbaited trap was used as negative control

**Results:** Significant catches were made of both sexes of ESBM (932), OBLR (96) and TTLR (145) to treatments with less acetic acid than previously (Figure 20).

### REFERENCES

El-Sayed A.M. 2015. The Pherobase: Database of Pheromones and Semiochemicals. <http://www.pherobase.com>.

SAS Institute Inc (1998) Statview. SAS Institute Inc., Cary, NC.

Suckling, D.M., and Shaw, P.W. 1992. Conditions that favor mating disruption of Epiphyas postvittana (Lepidoptera: Tortricidae). Env. Ent. 21: 949-956.

## Claims

1. A system for detecting, surveying, monitoring and/or controlling Lepidopterous insects comprising:
(a) a dispenser which dispenses a vapour blend of acetic acid and one or more compounds of formula I 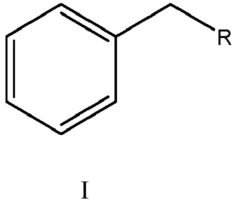 wherein R is selected from the group comprising -CN and -NC; and
(b) a trapping device.

2. A method of attracting Lepidopterous insects to a location, the method comprising placing at the location a composition comprising a vapour blend of acetic acid and one or more compounds of formula I, 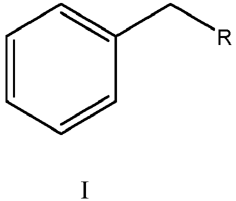 wherein R is selected from the group comprising -CN, -NC, CH₂OH, and -OH.

3. A method according to claim 2, wherein the vapour blend comprises acetic acid and one or more of benzyl nitrile and benzyl isonitrile.

4. A method for detecting, surveying, monitoring and/or controlling Lepidopterous insect populations in an area comprising: placing in the area, a system of claim 1.

5. A method of any one of claims 2-4, wherein the Lepidopterous insect is an insect of one of the families selected from Tortricidae, Geometridae and Noctuidae.

6. A method according to any one of claims 2-5, wherein the Lepidopterous insect is selected from the group comprising:
(a) the light brown apple moth: *Epiphyas postvittana* (LBAM);
(b) the eye spotted bud moth: *Spilonota ocellana* (ESBM);
(c) the oblique banded leafroller: *Choristoneura rosaceana* (OBLR);
(d) the pandemis leafroller: *Pandemis pyrusana* (PLR);
(e) the European tree leafroller: *Archips rosanus* (ETLR);
(f) the three lined leaf roller: *Pandemis limtata* (TLLR);
(g) the greenheaded leafroller: *Planotortrix octo*
(h) the brownheaded leafrollers: *Ctenopseustis obliquana* and *Ctenopseustis herana;*
(i) the fruit-tree leafroller: *Archips argyrospila;*
(j) the European grapevine moth: *Lobesia botrana;*
(k) the eastern spruce budworm: *Choristoneura fumiferana; and*
(l) the western spruce budworm: *Choristoneura occidentalis.*

7. A method according to any one of claims 2-6, wherein the Lepidopterous insect is female.

## Patentansprüche

1. System zur Detektion, Überprüfung, Überwachung und/oder Bekämpfung von Insekten aus der Ordnung der *Lepidoptera,* wobei das System Folgendes umfasst:
(a) eine Abgabevorrichtung, die eine Dampfmischung von Essigsäure und einer oder mehreren Verbindungen der Formel I abgibt: 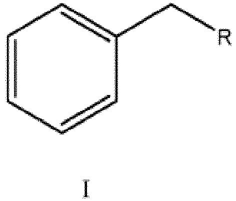 worin R aus der -CN und -NC umfassenden Gruppe ausgewählt ist; und
(b) eine Fangvorrichtung.

2. Verfahren zum Anlocken von Insekten aus der Ordnung der *Lepidoptera* an einen Ort, wobei das Verfahren das Positionieren einer Zusammensetzung an dem Ort umfasst, die eine Dampfmischung von Essigsäure und einer oder mehreren Verbindungen der Formel I umfasst: 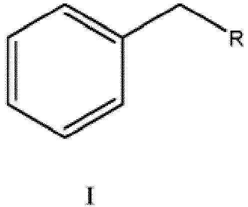 worin R aus der -CN, -NC, CH₂OH und -OH umfassenden Gruppe ausgewählt ist.

3. Verfahren nach Anspruch 2, wobei die Dampfmischung Essigsäure und eines oder mehrere von Benzylnitril und Benzylisonitril umfasst.

4. Verfahren zur Detektion, Überprüfung, Überwachung und/oder Bekämpfung von Populationen von Insekten aus der Ordnung der *Lepidoptera* in einem Gebiet, welches das Platzieren eines Systems nach Anspruch 1 in dem Gebiet umfasst.

5. Verfahren nach einem der Ansprüche 2 bis 4, wobei das Insekt aus der Ordnung der *Lepidoptera* ein Insekt einer aus *Tortricidae, Geometridae* und *Noctuidae* ausgewählten Familie ist.

6. Verfahren nach einem der Ansprüche 2 bis 5, wobei das Insekt aus der Ordnung der *Lepidoptera* aus der aus den folgenden bestehenden Gruppe ausgewählt ist:
(a) *Epiphyas postvittana* (hellbraune Apfelmotte, "light brown apple moth", LBAM);
(b) *Spilonota ocellana* (roter Knospenwickler, "eye spotted bud moth", ESBM);
(c) *Choristoneura rosaceana* (Schrägband-Wickler, "oblique banded leafroller, OBLR);
(d) *Pandemis pyrusana* (Pandemis-Wickler, "pandemis leafroller", PLR);
(e) *Archips rosana* (Heckenwickler, "European tree leafroller", ETLR);
(f) *Pandemis limitata* (dreizeiliger Wickler, "three-lined leafroller", TLLR);
(g) *Planotortrix octo* (Grünkopfwickler, "green-headed leafroller");
(h) *Ctenopseustis obliquana* und *Ctenopseustis herana* (Braunkopfwickler, "brownheaded leafrollers");
(i) *Archips argyrospila* (Obstbaumwickler, "fruit-tree leafroller");
(j) *Lobesia botrana* (bekreuzter Traubenwickler, "European grapewine moth");
(k) *Choristoneura fumiferana* (Östlicher Fichtenknospenwurm, "eastern spruce budworm"); und
(l) *Choristoneura occidentalis* (Westlicher Fichtenknospenwurm, "western spruce budworm").

7. Verfahren nach einem der Ansprüche 2 bis 6, wobei das Insekt aus der Ordnung der *Lepidoptera* ein Weibchen ist.

## Revendications

1. Système de détection, d'observation, de surveillance et/ou de contrôle d'insectes lépidoptères, comprenant :
(a) un distributeur qui distribue un mélange en phase vapeur d'acide acétique et d'un ou plusieurs composés de formule I 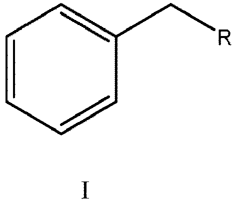 dans lequel R est sélectionné dans le groupe comprenant -CN et -NC ; et
(b) un dispositif de piégeage.

2. Procédé pour attirer des insectes lépidoptères à un emplacement, le procédé comprenant la mise en place au niveau de l'emplacement d'une composition comprenant un mélange en phase vapeur d'acide acétique et d'un ou plusieurs composés de formule I, 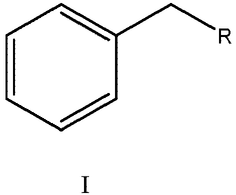 dans lequel R est sélectionné dans le groupe comprenant -CN, -NC, CH₂OH, et -OH.

3. Procédé selon la revendication 2, dans lequel le mélange en phase vapeurs comprend de l'acide acétique et un ou plusieurs parmi le nitrile de benzyle et l'isonitrile de benzyle.

4. Procédé de détection, d'étude, de surveillance et/ou de contrôle de populations d'insectes lépidoptères dans une zone comprenant : une mise en place dans la zone d'un système selon la revendication 1.

5. Procédé selon l'une quelconque des revendications 2 à 4, dans lequel l'insecte lépidoptère est un insecte de l'une des familles sélectionnées parmi les Tortricidés, les Géometridés et les Noctuidés.

6. Procédé selon l'une quelconque des revendications 2 à 5, dans lequel l'insecte lépidoptère est sélectionné dans le groupe comprenant :
(a) pyrale brun pâle de la pomme : *Epiphyas postvittana* (LBAM) ;
(b) tordeuse rouge des bourgeons : *Spilonota ocellana* (ESBM) ;
(c) tordeuse à bandes obliques : *Choristoneura rosaceana* (OBLR) ;
(d) tordeuse pandémis : *Pandemis pyrusana* (PLR) ;
(e) tordeuse d'arbres européenne : *Archips rosanus* (ETLR) ;
(f) tordeuse à trois lignes : *Pandemis limtata* (TLLR) ;
(g) tordeuse à tête verte : *Planotortrix octobre*
(h) tordeuse à tête brune : *Ctenopseustis obliquana* et *Ctenopseustis herana ;*
(i) tordeuse d'arbres fruitiers : *Archips argyrospila ;*
(j) eudemis de la vigne : *Lobesia botrana ;*
(k) tordeuse des bourgeons de l'épinette orientale : *Choristoneura fumiferana ;* et
(l) la tordeuse de l'épinette occidentale : *Choristoneura occidentalis.*

7. Procédé selon l'une quelconque des revendications 2 à 6, dans lequel l'insecte lépidoptère est une femelle.
